# EUROPEAN PATENT SPECIFICATION

(11) **EP 3 265 540 B1**
(45) Date of publication and mention of the grant of the patent: **15.07.2020**
(21) Application number: 16716720.4
(22) Date of filing: 04.03.2016
(51) Int. Cl.: C09K 11/63, G21K 4/00, C09K 11/85

(54) **SCINTILLATOR COMPOSITION, RADIATION DETECTION APPARATUS AND RELATED METHOD**
SZINTILLATORZUSAMMENSETZUNG, STRAHLUNGSDETEKTOR UND ENTSPRECHENDES VERFAHREN
COMPOSITION DE SCINTILLATEUR, APPAREIL DE DÉTECTION D'UN RAYONNEMENT ET PROCÉDÉ ASSOCIÉ

(30) Priority: 06.03.2015 IN 1105CH2015
(43) Date of publication of application: 10.01.2018
(73) Proprietor: General Electric Company, Schenectady, NY 12345 (US)
(72) Inventor: RAMACHANDRA, Srinidhi, Bangalore 560066 (IN); SRIVASTAVA, Alok, Mani, Niskayuna, NY 12309 (US); RAMACHANDRAN, Gopi, Chandran, Bangalore Karnataka 560066 (IN); NAMMALWAR, Prasanth, Kumar, Bangalore Karnataka 560037 (IN); CLIMENT, Helene, Claire, Sugarland, TX 77478-4506 (US)
(74) Representative: BRP Renaud & Partner mbB Rechtsanwälte Patentanwälte Steuerberater
(86) International application number: PCT/US2016/020808
(87) International publication number: WO 2016/144718

(56) References cited:
- CN-A- 101 270 286
- US-A- 5 140 159
- NIUMIAO ZHANG ET AL: "Color tunable emission in Ce3+ and Tb3+ co-doped Ba2Ln(BO3)2Cl (Ln=Gd and Y) phosphors for white light-emitting diodes", SPECTROCHIMICA ACTA. PART A: MOLECULAR AND BIOMOLECULAR SPECTROSCOPY, vol. 116, 1 December 2013 (2013-12-01), pages 556-561, XP055274364, NL ISSN: 1386-1425, DOI: 10.1016/j.saa.2013.07.076
- SUN J ET AL: "Luminescence properties and energy transfer in BaY(BO)Cl:Ce,Tbphosphors", APPLIED PHYSICS B ; LASERS AND OPTICS, SPRINGER, BERLIN, DE, vol. 107, no. 3, 31 March 2012 (2012-03-31), pages 827-831, XP035071895, ISSN: 1432-0649, DOI: 10.1007/S00340-012-4961-5
- HUANG L ET AL: "Luminescence properties of Ce<3+> and Tb<3+> doped rare earth borate glasses", JOURNAL OF ALLOYS AND COMPOUNDS, ELSEVIER SEQUOIA, LAUSANNE, CH, vol. 316, no. 1-2, 2 March 2001 (2001-03-02), pages 256-259, XP027394248, ISSN: 0925-8388 [retrieved on 2001-03-02]

## Description

### BACKGROUND

This invention relates generally to scintillator compositions and, more particularly, to Ce³⁺ activated borate dihalide scintillator compositions.
NIUMIAD ZHANG ET AL: 'Color tunable emission in Ce3+ and Tb3+ co-doped Ba2Ln(BO3)2Cl (Ln=Gd and Y) phosphors for white light-emitting diodes', Spectrochimica Acta, Part A: Molecular and Biomolecular Spectroscopy, vol. 116, 1 December 2013, pages 556 to 561 discloses emission and excitation spectra as well as a luminescence decays for energy transfer from Ce3+ to Tb3+.

Scintillators have been found to be useful for applications in chemistry, physics, geology and medicine. Specific examples of the applications include positron emission tomography (PET) devices, well-logging for the oil and gas industry and various digital imaging applications. Scintillators are also being investigated for use in detectors for security devices, for example, detectors for radiation sources which may indicate the presence of radioactive materials in cargo containers.

For all of these applications, the composition of the scintillator is related to device performance. The scintillator needs to be responsive to X-ray and gamma ray excitation. Moreover, the scintillator should possess a number of characteristics which enhance radiation detection. For example, most scintillator materials possess high light output, short decay time, high "stopping power," and acceptable energy resolution. Further, other properties can also be relevant, depending on how the scintillator is used, as mentioned below.

Various scintillator materials which possess most or all of these properties have been in use over the years. Examples include thallium-activated sodium iodide (NaI(Tl)); bismuth germanate (BGO); cerium-doped gadolinium orthosilicate (GSO); cerium-doped lutetium orthosilicate (LSO); and cerium-activated lanthanide-halide compounds. Each of these materials has properties which are suitable for certain applications. However, many of them also have some drawbacks. The common problems are low light yield, physical weakness, and the inability to produce large-size, high quality single crystals. Other drawbacks are also present. For example, the thallium-activated materials are very hygroscopic, and can also produce a large and persistent after-glow, which can interfere with scintillator function. Moreover, the BGO materials suffer from slow decay time and low light output. On the other hand, the LSO materials are expensive, and may also contain radioactive lutetium isotopes which can also interfere with scintillator function.

The new scintillator materials would be of considerable interest if they could satisfy the ever-increasing demands for commercial and industrial use. The materials are desired to be moisture resistant, exhibit excellent light output, have relatively fast decay times and good energy resolution characteristics, especially in the case of gamma rays. Furthermore, they should be capable of being produced efficiently, at reasonable cost and acceptable crystal size.

### BRIEF DESCRIPTION

Embodiments of the invention are directed towards a scintillator material composition, an apparatus having a scintillator single crystal and its method of working.

In one embodiment, a scintillator composition of formula AD(BO₃)X₂:E, is disclosed. In this formula, A may be barium, calcium, strontium, lanthanum, or any combinations of any of barium, calcium, strontium, and lanthanum. D is aluminum, gallium, magnesium, or any combinations of any of aluminum, gallium, and magnesium. X may be fluorine, chlorine or a combination of fluorine and chlorine. E includes cerium or a combination of cerium and lithium.

In one embodiment, an apparatus for detecting high energy radiation in a harsh environment is disclosed. The apparatus includes a scintillator single crystal having an emission wavelength greater than about 200 nm. The scintillator single crystal includes a scintillator composition of formula AD(BO₃)X₂:E. In this formula, A may be barium, calcium, strontium, lanthanum, or any combinations of any of barium, calcium, strontium, and lanthanum. D is aluminum, gallium, magnesium, or any combinations of any of aluminum, gallium, and magnesium. X may be fluorine, chlorine or a combination of fluorine and chlorine. E includes cerium or a combination of cerium and lithium.

In one embodiment, a method of detecting high energy radiation in a harsh environment is disclosed. The method includes receiving radiation by a scintillator single crystal, producing photons that are characteristic of the radiation and detecting the photons with a photon detector coupled to the scintillator single crystal. The scintillator single crystal includes a scintillator composition of formula AD(BO₃)X₂:E. In this formula, A may be barium, calcium, strontium, lanthanum, or any combinations of any of barium, calcium, strontium, and lanthanum. D is aluminum, gallium, magnesium, or any combinations of any of aluminum, gallium, and magnesium. X may be fluorine, chlorine or a combination of fluorine and chlorine. E includes cerium or a combination of cerium and lithium.

### DRAWINGS

These and other advantages and features will be more readily understood from the following detailed description of preferred embodiments of the invention that is provided in connection with the accompanying drawings.
FIG. 1 is a perspective view of an apparatus including a scintillator material and photo detector, according to an embodiment of the present invention;
FIG. 2 is an emission wavelength spectra of a barium aluminum borate difluoride (BaAl(BO₃)F₂) composition with cerium doping, when excited with 235 nm wavelength, according to an embodiment of the present invention;
FIG. 3 is a graphical view of a temperature dependency of luminescence intensity of a barium aluminum borate difluoride (BaAl(BO₃)F₂) composition with cerium doping, according to an embodiment of the present invention;
FIG. 4 is a graphical view of a temperature dependency of luminescence intensity of a 10% calcium substituted barium aluminum borate difluoride (BaAl(BO₃)F₂) composition with cerium doping, according to an embodiment of the present invention;
FIG. 5 is an emission wavelength spectra of a 20% calcium substituted barium aluminum borate difluoride (BaAl(BO₃)F₂) composition with cerium doping, according to an embodiment of the present invention;
FIG. 6 is a graphical view of a temperature dependency of luminescence intensity of a calcium aluminum borate difluoride (CaAl(BO₃)F₂) composition with cerium doping, according to an embodiment of the present invention;
FIG. 7 is an emission wavelength spectra of a calcium aluminum borate difluoride (CaAl(BO₃)F₂) composition with cerium doping, when excited with 235 nm wavelength, according to an embodiment of the present invention;
FIG. 8 is a graphical view of a temperature dependency of luminescence intensity of a gallium substituted barium aluminum borate difluoride (Ba(Al, Ga)(BO₃)F₂) composition with cerium doping, according to an embodiment of the present invention; and
FIG. 9 is a graphical view of a temperature dependency of luminescence intensity of a gallium substituted barium aluminum borate difluoride (Ba Ga(BO₃)F₂) composition with cerium doping, according to an embodiment of the present invention.

### DETAILED DESCRIPTION

Aspects of the present invention will now be described in more detail with reference to exemplary embodiments thereof as shown in the appended drawings. While the present invention is described below with reference to preferred embodiments, it should be understood that the present invention is not limited thereto. Those of ordinary skill in the art having access to the teachings herein will recognize additional implementations, modifications, and embodiments, as well as other fields of use, which are within the scope of the present invention as disclosed and claimed herein, and with respect to which the present invention could be of significant utility.

In the following description, whenever a particular aspect or feature of an embodiment of the invention is said to comprise or consist of at least one element of a group and combinations thereof, it is understood that the aspect or feature may comprise or consist of any of the elements of the group, either individually or in combination with any of the other elements of that group.

In the following specification and the claims that follow, the singular forms "a," "an," and "the" include plural referents unless the context clearly dictates otherwise.

Approximating language, as used herein throughout the specification and claims, may be applied to modify any quantitative representation that could permissibly vary without resulting in a change in the basic function to which it is related. Accordingly, a value modified by a term or terms, such as "about" or "substantially," may not be limited to the precise value specified, and may include values that differ from the specified value. In at least some instances, the approximating language may correspond to the precision of an instrument for measuring the value.

An aspect of the present invention is directed to a scintillator composition for use in oil well drilling applications in harsh, down-hole environments where shock levels are in the range of about 20-30 times gravitational acceleration. Further, the scintillator material described herein is operable at a high temperature, and at a wide temperature range, and is less sensitive to temperature variation.

Scintillator materials are in common use as a component of radiation detectors for gamma-rays, X-rays, cosmic rays and particles characterized by an energy level of greater than about 1 keV. A scintillator crystal is coupled with a light-detection means, that is, a photo detector. When photons from a radionuclide source impact the crystal, the crystal emits light. The photo detector produces an electrical signal proportional to the number of light pulses received, and to their intensity.

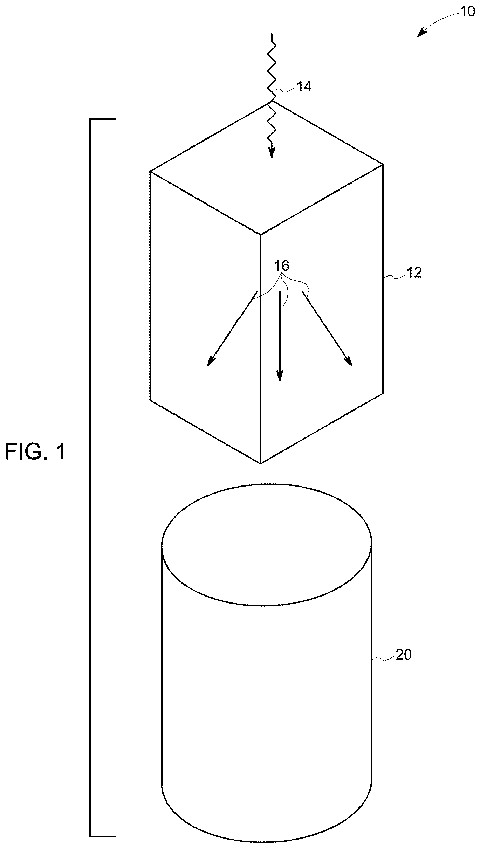

In an exemplary embodiment disclosed in FIG. 1, a system or apparatus 10 for detecting high-energy radiation is described. In one embodiment, the apparatus 10 (alternately radiation detector) includes one or more scintillator composition 12 described herein. A scintillator material can absorb the radiation energy through the excitation of electrons and holes. These electrons and holes can recombine and emit photons. In the present embodiment, the scintillator 12 is capable of converting high energy radiation 14 into photons 16. Photo detector device 20 can be a variety of devices, all well-known in the art. Photo detector device 20 may be used to detect photons 16 and convert them to electrical or electronic signals (not shown) that can be detected by an associated electronics to determine time, energy, and position of the impinged high energy radiation. Non-limiting examples of a photo detector device 20 may include photomultiplier tubes, photodiodes, CCD sensors, and image intensifiers. The choice of a particular photo detector 20 will depend in part on the type of radiation detector 10 being constructed and on the radiation detector's intended use.

The radiation detector 10 may be connected to a variety of tools and devices. Non-limiting examples include well-logging tools and nuclear medicine devices. In another non-limiting example, the radiation detector 12 may be connected to digital imaging equipment. In one embodiment, the system 10 is an apparatus for the detection of high-energy radiation.

Generally, desirable properties of a scintillator material 12 include high density (for high radiation stopping power), high light output, fast decay time, high energy resolution, good environmental stability, and the availability of large single crystals. These properties are related to the fundamental material properties, i.e., band gap (important for the light output), carrier transport efficiency (relevant to scintillation decay), and optical, chemical, and structural properties.

"Stopping power" is the ability of a material to absorb radiation, and is directly related to the density and Z (atomic number) of the scintillator material. Scintillator materials which have high stopping power allow little or no radiation to pass through, and this is a distinct advantage in efficiently capturing the radiation.

As used herein, the term, "light output" is the quantity of visible light emitted by the scintillator after being excited by a pulse of an x-ray or gamma ray, for example. High light output is desirable because it enhances the radiation detector's ability to convert the light into an electric pulse.

The term "decay time" refers to the time required for the intensity of the light emitted by the scintillator to decrease to a specified fraction of the light intensity at the time when the radiation excitation ceases. For many applications, such as the PET devices, shorter decay times are desirable because they allow efficient coincidence-counting of gamma rays. Consequently, scan times are reduced, and images can be improved by eliminating random counts due to accidental coincidences.

The "energy resolution" of a radiation detector refers to its ability to distinguish between energy rays (e.g., gamma rays) having very similar energy levels. Energy resolution is usually reported as a percentage value, after measurements are taken at a standard radiation emission energy for a given energy source. Lower energy resolution values are very desirable, because they usually result in a higher quality radiation detector.

The scintillator materials may be prepared and used in various forms. For example, in some embodiments the scintillator material is in monocrystalline (single crystal) form. The scintillator 12 in its single crystal form has a greater tendency for transparency and is especially useful for high-energy radiation detectors such as those used to detect gamma rays. Therefore, in one embodiment of the invention, the scintillator material used herein is in its single crystal form. In some exemplary embodiments, the scintillator composition can be used in other forms as well, depending on its intended end use. For example, the scintillator composition can be in a powder form.

It should be noted in the exemplary embodiments that the scintillator compositions may contain small amounts of impurities. These impurities usually originate with the starting components and typically constitute less than about 0.1% by weight, of the scintillator composition, and can be as little as 0.01% by weight. It should further be noted in the exemplary embodiment that the scintillator composition may also include parasitic additives, whose volume percentage is usually less than about 1%. Moreover in the exemplary embodiment, minor amounts of other materials may be purposefully included in the scintillator compositions.

The disclosed scintillator 12 of this specification is configured to detect radiation while operating at a wide temperature window, without substantial loss of radiation detection capability. The scintillator 12 disclosed herein is capable of operating at a temperature range of sub-room temperatures to elevated temperature, such as, for example, -50°C to 175°C. In one embodiment, the scintillator is configured to operate at a temperature range of -40 °C to 125 °C.

In one embodiment, the scintillator 12 is configured to operate at elevated temperatures such as, for example, greater than 100°C. As used herein, the scintillator is "configured to operate at a temperature greater than 100 °C" means that the scintillator is capable of operating at temperature greater than 100°C, without losing its capability of operating at temperatures less than 100°C. In a further embodiment, the scintillator 12 is configured to operate at temperatures even greater than 150°C. In another embodiment, the scintillator 12 may be operated at temperatures below room temperature. In one embodiment, the scintillator 12 may be configured to operate at a temperature less than about -40°C.

In one embodiment, the disclosed scintillator 12 is configured to detect impinging radiation while operating at a wide temperature range of over 200 °C, without substantial loss of radiation detection capability. As used herein "detecting radiation while operating at a wide temperature range of over 200 °C" means that a single arrangement of the scintillator 12 is capable of operating in this temperature window without any substantial change in the composition or arrangement of the scintillator 12 for the operation of any sub-window of this temperature range. For example, the scintillator 12 in its one configuration may be able to operate from -25 °C to up to 175 °C, without the need to replace or readjust the composition of the scintillator or without the need of extra protection to the scintillator. In another exemplary embodiment, the scintillator in its one configuration with a particular composition is able to operate from 0°C to up to 200 °C, without the need to change the configuration or composition of the scintillator and without the need of extra protection to the scintillator.

As used herein, the terms "capable of operating" or "configured to operate" at a temperature range means that there is no substantial variation in the peak light output of the scintillator 12 at any temperature window of the disclosed temperature range. As used herein, the "light output of the scintillator" is the total number of photons emitted upon interaction with an ionizing radiation. Normally, the light output of the scintillator is measured as number of photons/MeV.

The scintillator 12 disclosed herein may be configured to operate with a high light output at the specified temperature ranges when compared with the existing scintillator materials. The peak light output of many of the currently used scintillator materials are expected to drop considerably at high temperatures such as, for example, about 175 °C. A drop in light output of greater than 80% is normally seen in many of the generally used scintillator materials. The variation in light output at high temperatures may be measured using relative (percentage) photoluminescence intensity at that temperature with respect to room temperature.

The scintillator materials of the various embodiments used herein are having substantially high light output even at high temperatures. In one embodiment, photoluminescence intensity (alternately luminescence intensity) of the single crystal scintillator described herein at a temperature of about 175 °C is greater than about 60% of the luminescence intensity of that single crystal at room temperature. That is, the luminescence intensity drop from room temperature to a temperature above 175 °C is less than about 40%. In a further, particular embodiment, the scintillator single crystal at a temperature greater than 175 °C has luminescence intensity that is greater than about 75% of the luminescence intensity of the same single crystal at room temperature.

Some embodiments of the invention here are directed at a scintillator material that includes a cerium doped composition of formula AD(BO₃)X₂:E. As used herein A is barium, calcium, strontium, lanthanum, or any combinations of any of barium, calcium, strontium, and lanthanum. D is aluminum, gallium, magnesium, or any combinations of any of aluminum, gallium, and magnesium. X may be fluorine, chlorine or a combination of fluorine and chlorine. Activator E includes cerium.

In all cases of the exemplary embodiments disclosed herein, the scintillator composition uses a trivalent cerium ion (Ce³⁺) activator to produce efficient luminescence under ultraviolet, X-ray and gamma-ray excitation. In some embodiments, experiments carried out with praseodymium ion (Pr³⁺) as the activator in some of the borate dihalide did not result in any good light emission.

As can be appreciated, when the activator E is incorporated into the AD(BO₃)X₂ lattice, it takes place of the A element in the lattice, causing creation of defects and vacancies. This could lead to reduction in the luminescence intensity of the composition. A charge compensator is incorporated along with the activator into the lattice to help increase the efficiency by avoiding creation of defects and vacancies. For a AD(BO₃)X₂ matrix with a trivalent cerium ion as activator, charge-compensator used is at least one of monovalent sodium or lithium ions. In some exemplary embodiments, activator E includes lithium along with cerium for charge compensation.

The appropriate level of the activator E will depend on various factors, such as the particular divalent or trivalent ion present in the "A" site; monovalent, divalent, trivalent, or tetravalent ions present in the "D" site; the desired emission properties and decay time; and the type of detection device into which the scintillator composition 12 is being incorporated. Usually in the exemplary embodiments, the activator is employed at a level in the range of about 1 mole percent to about 100 mole percent, based on total moles of activator and matrix material. In many preferred embodiments, the amount of activator is in the range of about 1 mole percent to about 30 mole percent on the same basis. In one embodiment, the amount of cerium present in the scintillator material ranges from about 0.5 mol % to about 10 mol %. In an exemplary embodiment, the cerium doping level in the scintillator material is in a range from about 1 mol % to about 3 mol %. In one embodiment, a charge compensator is present in the scintillator composition in equivalent mole percentage level as an activator.

Further, the scintillator material used herein is desirable to have an emission wavelength greater than about 200 nm. In some embodiments, the scintillator material used herein has a peak emission wavelength in the range of about 250 nm to about 500 nm to match the spectral wavelength of the photomultiplier tubes that is best suited to be used along with this scintillator for the radiation detection. In one embodiment, the scintillator material used herein has an emission wavelength peak at greater than about 320 nm, and less than about 460 nm. In another embodiment, scintillator material has an emission wavelength peak in a range from about 300 nm to about 400 nm.

In one embodiment, a barium aluminum borate difluoride (BaAl(BO₃)F₂) scintillator composition with cerium doping is used as the scintillator material. As used herein, cerium occupies barium site after doping. There is a charge mismatch when Ce³⁺ gets substituted in Ba²⁺ site, hence, in one embodiment equivalent mole % (as cerium) of Li⁺ is used for charge compensation.

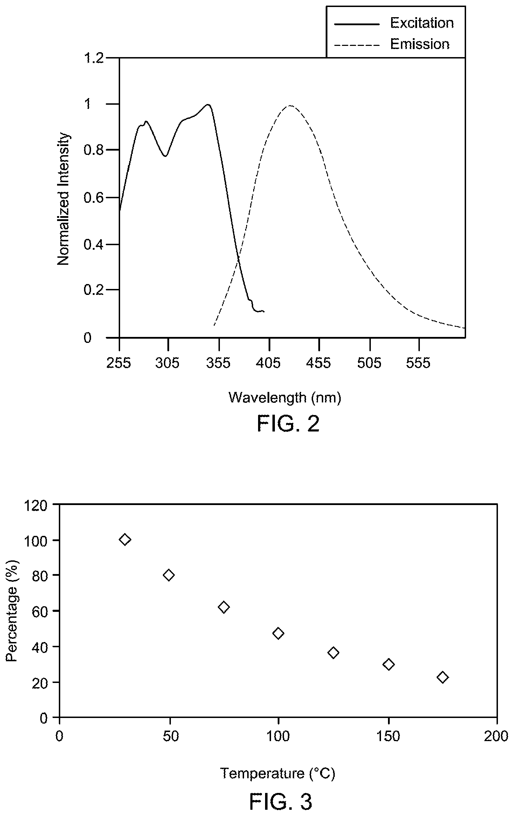

A scintillator composition of BaAl(BO₃)F₂ with 2% of cerium and 2% lithium doping seems to have an emission wavelength in the range from about 350 nm to about 500 nm with a peak at about 425 nm, when excited with a 235 nm wavelength, as shown in FIG. 2. This spectral response is very similar to the currently used NaI:Tl crystal, which has peak emission at about 415 nm. Further, NaI:Tl being a thallium activated material, produces a large and persistent after-glow lasting about hundreds of nanoseconds. The cerium activated compounds disclosed herein in the different embodiments, have lifetime of the after-glow in tens of nanoseconds range and hence are particularly advantageous over NaI:Tl material.

Barium aluminum borate difluoride composition is non-hygroscopic and amenable to be grown as large single crystals with conventional single crystal growing methods as disclosed by Yinchao Yue, Zhanggui Hu, Chuangtian Chen, "Flux growth of BaAlBO3F2 crystals," Journal of Crystal Growth 310 (2008) 1264-1267.

A graph of high temperature photoluminescence intensity of BaAl(BO₃)F₂:2%(Ce, Li) is as shown in FIG. 3. It can be seen that BaAl(BO₃)F₂:2%(Ce, Li) scintillator composition in powder form does not have good high temperature stable photoluminescence. Synthesis optimization and single crystal form of the composition may improve high temperature photoluminescence of this scintillator composition.

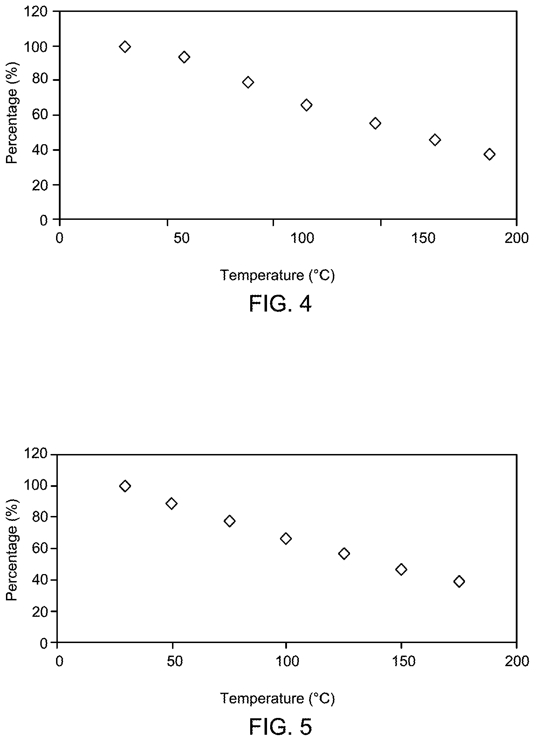

In one embodiment, calcium substituted BaAl(BO₃)F₂: Ce, Li scintillator compositions were investigated with the objective of studying effect of calcium substitutions on high temperature photoluminescence performance. FIG. 4 and FIG. 5 respectively demonstrate photoluminescence spectra of 10 mol% and 20 mol% calcium substituted (in the barium site) BaAl(BO₃)F₂: 2% (Ce, Li). 10 mol% and 20 mol% calcium substitution seems to be increasing the high temperature performance of the BaAl(BO₃)F₂: 2% (Ce, Li) in the powder form.

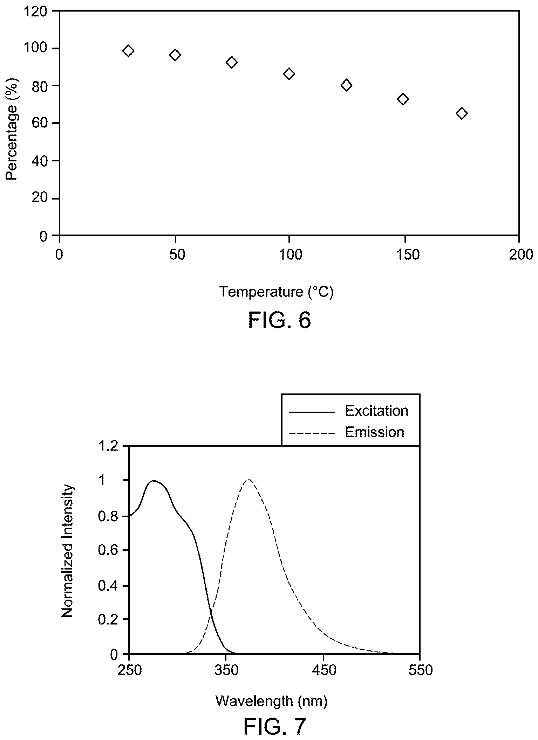

FIG. 6 demonstrates photoluminescence spectra of CaAl(BO₃)F₂: 2% (Ce, Li). A considerable improvement of high temperature stability of the photoluminescence was observed as compared to the performance of BaAl(BO₃)F₂: 2% (Ce, Li). There was less than about 40% reduction in the photoluminescence at 175°C for CaAl(BO₃)F₂: 2% (Ce, Li) in the powder form as compared to room temperature luminescence data of the same compound.

FIG. 7 demonstrates the spectral response of CaAl(BO₃)F₂: 2% (Ce, Li), when excited with a 235 nm wavelength. Emission spectra of CaAl(BO₃)F₂: 2% (Ce, Li) was observed to be ranging from about 330 nm to 470 nm with a peak at about 370 nm. Hence a photoluminescence peak shift to the lower wavelength occurred when barium was completely substituted by calcium in the BaAl(BO₃)F₂: 2% (Ce, Li) composition. Synthesis optimization of CaAl(BO₃)F₂:(Ce, Li) composition, optimization of activator percentages, and single crystal form may further improve the high temperature luminescence of this composition.

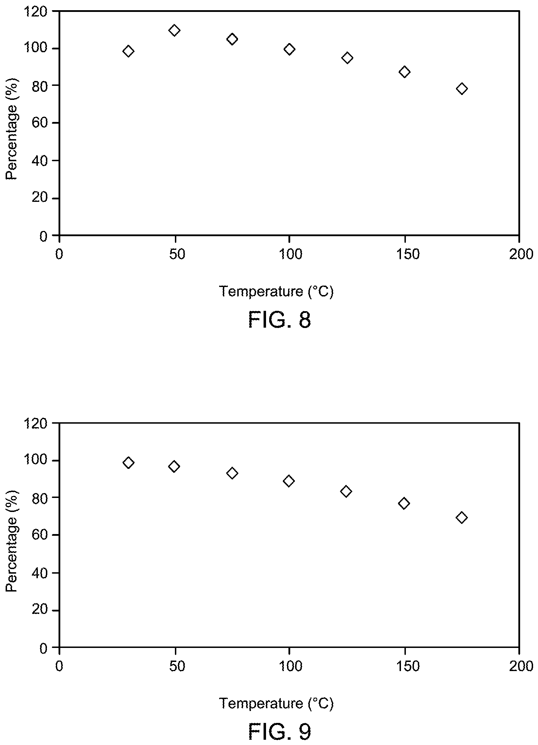

In some embodiments of the present invention, different scintillator compositions of formula (Ba,Ca) (Al,Ga) (BO₃)F₂: (Ce, Li) were investigated in the powder form. FIG. 8 demonstrates photoluminescence spectra of Ba(Al, Ga)(BO₃)F₂: 2% (Ce, Li) as a function of temperature. It can be observed that this composition is exhibiting high stability of photoluminescence at high temperatures. The drop in photoluminescence was less than about 20% at as high temperature as 175°C.

FIG. 9 demonstrates photoluminescence spectra of BaGa(BO₃)F₂: 2% (Ce, Li) as a function of temperature. This composition exhibits relatively good high temperature stability of photoluminescence when compared to BaAl(BO₃)F₂: 2% (Ce, Li). The drop in photoluminescence of BaGa(BO₃)F₂: 2% (Ce, Li) was observed to be less than about 30% at 175°C, when compared to the room temperature luminescence. Gallium substitution in the "D" site was also observed to shift photoluminescence peak to 365 nm, which is within the peak sensitivity range for some of the photo multiplier tubes that can be used along with this scintillator in the apparatus 10.

A variety of techniques may be used for the preparation of the scintillator compositions. In one embodiment, a suitable powder containing the desired materials in the correct proportions is first prepared, followed by such operations as calcination, die forming, sintering and/or hot isostatic pressing. Suitable powders may be prepared by mixing various forms of the reactants, for example, salts, halides or mixtures thereof. In some cases, individual constituents are used in combined form, for example, as commercially available in the combined form. For example, various halides of the alkaline earth metals could be used. Non-limiting examples of these compounds include calcium chloride, barium fluoride, and the like.

Mixing of reactants may be carried out by any suitable techniques which ensure thorough, uniform blending. For example, mixing can be carried out in an agate mortar and pestle. As an alternative exemplary embodiment, a blender or pulverization apparatus, such as a ball mill, bowl mill, hammer mill or a jet mill can be used. Continuing with the exemplary embodiment, the mixture can also contain various additives, such as fluxing compounds and binders and depending on compatibility and/or solubility, various liquids can sometimes be used as a vehicle during milling. It should be noted in the exemplary embodiment that suitable milling media should be used, that is, material that would not be contaminating to the scintillator composition, since such contamination could reduce its light-emitting capability.

The mixtures may be fired under temperature and time conditions sufficient to convert the mixture into a solid solution. The conditions required in the exemplary embodiments will depend in part on the specific reactants selected. The mixture is typically contained in a sealed vessel, such as a tube or crucible made of quartz or silver, during firing so that none of the constituents are lost to the atmosphere. Firing will usually be carried out in a furnace at a temperature in the range of about 500° C. to about 1,500° C. with a firing time typically ranging from about 15 minutes to about 10 hours. Firing is typically carried out in an atmosphere free of oxygen and moisture, for example, in a vacuum or under an inert gas such as but not limited to nitrogen, helium, neon, argon, krypton and xenon. After firing of the scintillator composition, the resulting material can be pulverized to place the scintillator composition into a powder form and conventional techniques can be used to process the powder into radiation detector elements.

In one embodiment, some initial trials for forming a scintillator composition of formula SrAl(BO₃)F₂: 2% (Ce, Li) were carried out. However, this material did not form the intended composition with required purity under similar synthetic conditions as used for the barium and calcium analogs of this material. However, considering the improvement of calcium aluminum borate difluoride over barium aluminum borate difluoride, a SrAl(BO₃)F₂: 2% (Ce, Li) compound or any variation with different replacements and substitutions in the A and D sites of this material is expected to be useful as a scintillator material for the intended applications.

In some embodiments of the present invention, lanthanum is present at "A" site. Lanthanum may be present along with barium, calcium, or barium and calcium in the A site or may be occupying all of A sites. When lanthanum is occupying the A site, charge neutrality of the overall matrix may be maintained by partially or fully replacing aluminum by magnesium. Different compositions with lanthanum at A site may include matrix such as, for example, (Ba,La)Al(BO₃)F₂, (Ca,La)Al(BO₃)F₂, (Ba,Ca,La)Al(BO₃)F₂, (Ba,La)(Al, Mg)(BO₃)F₂, (Ca,La)(Al,Mg)(BO₃)F₂, (Ba,Ca,La)(Al,Mg)(BO₃)F₂, (Ba,La) Mg(BO₃)F₂, (Ca,La)Mg(BO₃)F₂, (Ba,Ca,La)Mg(BO₃)F₂, and LaMg(BO₃)F₂, including chlorine variation in the halide site.

Since lanthanum may be present as La³⁺ in the scintillator composition, Ce³⁺ may act as the activator E without the need of a monovalent ion such as lithium for the charge neutrality. However, if lanthanum is sharing the A site with barium or calcium, scintillator compositions may be made with or without monovalent ions along with cerium as the activator E. Various compositions in this composition range are applicable as scintillator single crystal for the high energy radiation detection as they are expected to be emitting photons in the required wavelength range of about 250 nm to about 450 nm for the high-energy radiation detection.

In another embodiment of the scintillator composition, the matrix material used herein is in the form of a solid solution of at least two borate halides. As used herein, the term "solid solution" refers to a mixture of the borate halides in solid, crystalline form, which may include a single phase, or multiple phases. For example, in one embodiment, the solid solution is based on a mixture of a first borate halide and a second borate halide at any desirable ratio.

Further, it should be noted in the exemplary embodiment that the scintillator compositions 12 are usually described in terms of a matrix material component and an activator component. However, it should be noted in the exemplary embodiment that when the components are combined, they can be considered as a single, intimately-mixed composition, which still retains the attributes of the activator component and the matrix material component. For example, an illustrative scintillator composition LaMg(BO₃)F₂: 2%Ce can be expressed as La_{0.98}Ce_{0.02}Mg(BO₃)F₂.

A goal of a scintillator of an embodiment of the present invention involves detecting high-energy radiation such as gamma rays, neutrons, or X-rays. The scintillator of an embodiment of the present invention may be used specifically in harsh (e.g., high vibration, high temperature, etc.) environments, requiring robust materials. In one embodiment, the scintillator single crystal is exposed to the high energy radiation at a shock level in a range from about 20 to about 30 times gravitational acceleration. In a particular embodiment, the scintillator single crystal is exposed to the high energy radiation at a shock level of nearly about 25 times gravitational acceleration.

Accordingly, a method for detecting a high energy radiation using the apparatus 10 in a harsh environment down-hole drilling or wire line application includes exposing a scintillator to the high energy radiation and producing photons, and detecting the photons by a photo detector at a temperature greater than about 100°C. The detected photons are further processed to be converted into electrical signals using an associated electronics operating at temperature greater than about 100°C.

## Claims

1. A scintillator composition, of formula AD(BO₃)X₂:E,
wherein
A is Ba, Ca, Sr, La, or a combination thereof;
D is Al, Ga, Mg, or a combination thereof,
X is F, Cl, or a combination thereof, and
E is Ce, or a combination of Ce and Li.

2. The scintillator composition of claim 1, wherein an amount of cerium ranges from 0.5 mol % to 10 mol %.

3. The scintillator composition of claim 1, of formula (Ba,Ca) (Al,Ga) (BO₃)F₂: (Ce, Li).

4. The scintillator composition of claim 1, of formula Ba Ga (BO₃)F₂: (Ce, Li).

5. The scintillator composition of claim 1, of formula LaMg(BO₃)F₂: Ce.

6. The scintillator composition of claim 1, wherein an emission wavelength of the composition is greater than 200 nm.

7. The scintillator composition of claim 1, wherein an emission peak of the composition is in a range from 320 nanometers to 460 nanometers.

8. The scintillator composition of claim 1, comprising Ce³⁺.

9. The scintillator composition of claim 1, in a single crystal form.

10. An apparatus for detecting a high-energy radiation in a harsh environment, the apparatus comprising:
a scintillator single crystal of formula AD(BO₃)X₂:E, and having an emission wavelength greater than 200 nm, wherein
A is Ba, Ca, Sr, La, or a combination thereof;
D is Al, Ga, Mg, or a combination thereof,
X is F, Cl, or a combination thereof, and
E is Ce, or a combination of Ce and Li.

11. The apparatus of claim 10, wherein an amount of cerium present in the scinitllator single crystal ranges from 0.5 atomic % to 10 atomic %.

12. The apparatus of claim 10, wherein an emission effeciency of the single crystal at a temperature greater than 150 °C is greater than 60% of the emission efficiency of the single crystal at room temperature.

13. A method for detecting high-energy radiation with a scintillation detector, the method comprising:
receiving radiation by a scintillator single crystal, and producing photons which are characteristic of the radiation; and
detecting the photons with a photon detector coupled to the scintillator single crystal;
wherein the scintillator single crystal is of formula AD(BO₃)X₂:E,
wherein
A is Ba, Ca, Sr, La, or a combination thereof;
D is Al, Ga, Mg, or a combination thereof,
X is F, Cl, or a combination thereof, and
E is Ce, or a combination of Ce and Li.

14. The method of claim 13, wherein the scintillator single crystal is exposed to the high-energy radiation at a temperature greater than 150°C.

15. The method of claim 13, wherein the scintillator single crystal produces photons in an emission wavelength greater than 200 nm.

## Patentansprüche

1. Szintillatorzusammensetzung der Formel AD(BO₃)X₂:E,
wobei
A Ba, Ca, Sr, La oder eine Kombination davon ist;
D Al, Ga, Mg oder eine Kombination davon ist,
X F, Cl oder eine Kombination davon ist und
E Ce oder eine Kombination von Ce und Li ist.

2. Szintillatorzusammensetzung nach Anspruch 1, wobei die Menge an Cer im Bereich von 0,5 Mol-% bis 10 Mol -% liegt.

3. Szintillatorzusammensetzung nach Anspruch 1 mit der Formel (Ba,Ca) (Al,Ga) (BO₃)F₂: (Ce, Li).

4. Szintillatorzusammensetzung nach Anspruch 1 mit der Formel Ba Ga (BO₃)F₂: (Ce, Li).

5. Szintillatorzusammensetzung nach Anspruch 1 mit der Formel LaMg(BO₃)F₂: Ce.

6. Szintillatorzusammensetzung nach Anspruch 1, wobei eine Emissionswellenlänge der Zusammensetzung mehr als 200 nm beträgt.

7. Szintillatorzusammensetzung nach Anspruch 1, wobei ein Emissionsmaximum der Zusammensetzung in einem Bereich von 320 Nanometer bis 460 Nanometer liegt.

8. Szintillatorzusammensetzung nach Anspruch 1, die Ce³⁺ umfasst.

9. Szintillatorzusammensetzung nach Anspruch 1 in einer Einkristall-Form.

10. Vorrichtung zum Erfassen einer energiereichen Strahlung in einer rauen Umgebung, wobei die Vorrichtung umfasst:
einen Szintillator-Einkristall der Formel AD(BO₃)X₂:E mit einer Emissionswellenlänge von mehr als 200 nm, wobei
A Ba, Ca, Sr, La oder eine Kombination davon ist;
D Al, Ga, Mg oder eine Kombination davon ist,
X F, Cl oder eine Kombination davon ist und
E Ce oder eine Kombination von Ce und Li ist.

11. Vorrichtung nach Anspruch 10, wobei eine in dem Szintillator-Einkristall vorliegende Menge an Cer im Bereich von 0,5 Atomprozent bis 10 Atomprozent liegt.

12. Vorrichtung nach Anspruch 10, wobei eine Emissionseffizienz des Einkristalls bei einer Temperatur von mehr als 150 °C mehr als 60 % der Emissionseffizienz des Einkristalls bei Raumtemperatur beträgt.

13. Verfahren zum Detektieren energiereicher Strahlung mit einem Szintillationsdetektor, wobei das Verfahren umfasst:
Empfangen von Strahlung durch einen Szintillator-Einkristall und Erzeugen von Photonen, die für die Strahlung charakteristisch sind; und
Detektieren der Photonen mit einem Photonendetektor, der mit dem Szintillator-Einkristall gekoppelt ist;
wobei der Szintillator-Einkristall die Formel AD(BO₃)X₂:E aufweist,
wobei
A Ba, Ca, Sr, La oder eine Kombination davon ist;
D Al, Ga, Mg oder eine Kombination davon ist,
X F, Cl oder eine Kombination davon ist und
E Ce oder eine Kombination von Ce und Li ist.

14. Verfahren nach Anspruch 13, wobei der Szintillator-Einkristall der energiereichen Strahlung bei einer Temperatur von mehr als 150 °C ausgesetzt wird.

15. Verfahren nach Anspruch 13, wobei der Szintillator-Einkristall Photonen in einer Emissionswellenlänge von mehr als 200 nm erzeugt.

## Revendications

1. Composition de scintillateur, de formule AD(BO₃)X₂:E,
dans laquelle
A est Ba, Ca, Sr, La, ou une combinaison de ceux-ci ;
D est Al, Ga, Mg ou une combinaison de ceux-ci,
X est F, Cl, ou une combinaison de ceux-ci, et
E est Ce, ou une combinaison de Ce et de Li.

2. Composition de scintillateur selon la revendication 1, dans laquelle une quantité de cérium va de 0,5 % en moles à 10 % en moles.

3. Composition de scintillateur selon la revendication 1, de formule (Ba,Ca) (Al,Ga) (BO₃)F₂: (Ce, Li).

4. Composition de scintillateur selon la revendication 1, de formule Ba Ga (BO₃)F₂: (Ce, Li).

5. Composition de scintillateur selon la revendication 1, de formule LaMg(BO₃)F₂: Ce.

6. Composition de scintillateur selon la revendication 1, dans laquelle une longueur d'onde d'émission de la composition est supérieure à 200 nm.

7. Composition de scintillateur selon la revendication 1, dans laquelle un pic d'émission de la composition est dans une plage de 320 nanomètres à 460 nanomètres.

8. Composition de scintillateur selon la revendication 1, comprenant Ce³⁺.

9. Composition de scintillateur selon la revendication 1, sous une forme monocristalline.

10. Appareil de détection d'un rayonnement à haute énergie dans un environnement difficile, l'appareil comprenant :
un monocristal de scintillateur de formule AD(BO₃)X₂:E, et ayant une longueur d'onde d'émission supérieure à 200 nm, dans laquelle
A est Ba, Ca, Sr, La, ou une combinaison de ceux-ci ;
D est Al, Ga, Mg ou une combinaison de ceux-ci,
X est F, Cl, ou une combinaison de ceux-ci, et
E est Ce, ou une combinaison de Ce et de Li.

11. Appareil selon la revendication 10, dans lequel une quantité de cérium présente dans le monocristal de scintillateur va de 0,5 % atomique à 10 % atomique.

12. Appareil selon la revendication 10, dans lequel une efficacité d'émission du monocristal à une température supérieure à 150 °C est supérieure à 60 % de l'efficacité d'émission du monocristal à température ambiante.

13. Procédé pour détecter un rayonnement à haute énergie avec un détecteur à scintillation, le procédé comprenant les étapes consistant à :
recevoir un rayonnement par un monocristal de scintillateur, et produire des photons qui sont caractéristiques du rayonnement ; et
détecter les photons avec un détecteur de photons couplé au monocristal de scintillateur ;
dans lequel le monocristal de scintillateur est de formule AD(BO₃)X₂:E,
dans laquelle
A est Ba, Ca, Sr, La, ou une combinaison de ceux-ci ;
D est Al, Ga, Mg ou une combinaison de ceux-ci,
X est F, Cl, ou une combinaison de ceux-ci, et
E est Ce, ou une combinaison de Ce et de Li.

14. Procédé selon la revendication 13, dans lequel le monocristal de scintillateur est exposé au rayonnement à haute énergie à une température supérieure à 150 °C.

15. Procédé selon la revendication 13, dans lequel le monocristal de scintillateur produit des photons dans une longueur d'onde d'émission supérieure à 200 nm.
